# EUROPÄISCHE PATENTSCHRIFT

(11) **EP 3 181 770 B1**
(45) Veröffentlichungstag und Bekanntmachung des Hinweises auf die Patenterteilung: **23.10.2019**
(21) Anmeldenummer: 16200521.9
(22) Anmeldetag: 24.11.2016
(51) Int. Cl.: E04B 1/76, B25B 31/00, B25B 23/00, F16B 13/00

(54) **POSITIONIERVORRICHTUNG**
POSITIONING DEVICE
DISPOSITIF DE POSITIONNEMENT

(30) Priorität: 14.12.2015 AT 5022315 U
(43) Veröffentlichungstag der Anmeldung: 21.06.2017
(73) Patentinhaber: Fröwis Aktiengesellschaft, 9486 Schaanwald (LI)
(72) Erfinder: FRÖWIS, Markus, 6820 Frastanz (AT)
(74) Vertreter: Torggler & Hofinger Patentanwälte

(56) Entgegenhaltungen:
- EP-A2- 2 689 894
- DE-A1-102013 103 287
- DE-U1-202012 006 363

## Beschreibung

Die vorliegende Erfindung betrifft eine Positioniervorrichtung zur korrekten Positionierung eines Dämmstoffhalters in einer Dämmstoffplatte abhängig vom Untergrund, an welchem die Dämmstoffplatte zu befestigen ist.

Solche Positioniervorrichtungen (siehe DE 202012006363 U1, EP2689894 A2 und DE102013103287 A1) werden benötigt, um den Dämmstoffhalter in eine korrekte Position in Dämmstoffplatte einzudrehen, damit sichergestellt ist, dass die Dämmstoffplatte nach Befestigung am Untergrund mit den vorgeschriebenen Überzugskräften gehalten ist. Zu diesem Zweck weist eine gattungsgemäße Positioniervorrichtung einen Abstandhalter auf, der wahlweise an unterschiedlichen vorgegebenen Positionen des länglichen Grundkörpers des Eindrehwerkzeugs entsprechend einer Dicke der zu befestigenden Dämmstoffplatte mit dem Eindrehwerkzeug verbindbar ist und über einen Anschlag verfügt, durch welchen jene Länge begrenzbar ist, bis zu welcher das Eindrehwerkzeug in die Dämmstoffplatte eindrehbar ist.

Nach erfolgter Positionierung des Eindrehwerkzeugs muss ein Dübel lagerichtig zum Untergrund positioniert werden. Hierfür musste bisher die richtige Dübellänge gewählt werden, dann kann der Dämmstoffhalter immer bis zum Untergrund in die Dämmstoffplatte eingeschraubt werden.

Der Untergrund, welcher die eigentliche Befestigung der Dämmstoffplatte über den Dübel gewährleistet (tragender Untergrund) kann mit unterschiedlichen Schichten aus nichttragendem Untergrund, z. B. Altputz oder Kleber, versehen sein.

Aufgabe der Erfindung ist die Bereitstellung einer gattungsgemäßen Positioniervorrichtung, welche auf einfache Art an unterschiedliche nichttragende Untergrunde anpassbar ist.

Diese Aufgabe wird durch eine Verwendung einer Positioniervorrichtung mit den Merkmalen des Anspruchs 1 gelöst. Vorteilhafte Ausführungsformen der Erfindung sind in den abhängigen Ansprüchen definiert.

Im Stand der Technik wurden verschiedenen Dübellängen gewählt, um unterschiedliche Dicken des nichttragenden Untergrunds zu berücksichtigen. Bei der Erfindung wird hingegen die Position des Dämmstoffhalters in der Dämmstoffplatte in Abhängigkeit der Dicke des nichttragenden Untergrunds gewählt, der Dämmstoffhalter wird also nicht immer bis zum Untergrund in die Dämmstoffplatte eingeschraubt werden. Es ist nur eine einzige Dübellänge erforderlich. Hierfür ist es natürlich erforderlich, dass der Monteur in die Lage versetzt wird, die Dicke des nichttragenden Untergrunds korrekt zu berücksichtigen. Die Dicke des nichttragenden Untergrunds muss der Monteur nicht kennen.

Durch die Erfindung wird der Dämmstoffhalter um jenen Betrag unterschiedlich tief in der Dämmstoffplatte eingedreht, je nachdem wie groß die nichttragenden Schicht ist, wodurch Bohrtiefe im tragenden Untergrund eingespart werden kann. In Kenntnis der Art der nichttragenden Schicht (diese ist bei Altbauten größer als bei Neubauten) kann der Monteur entweder bei Verwendung eines einzigen Abstandhalters (erste Variante der Erfindung) die zu verwendende Verbindungslage wählen oder bei Verwendung zweier Abstandhalter (zweite Variante der Erfindung) den korrekten Abstandhalter wählen.

Zwischen Neubauten und Altbauten wird sich die Dicke des nichttragenden Untergrunds zwischen 10 und 40 Millimeter unterscheiden. Der vordefinierte Betrag ist bei der Erfindung entsprechend gewählt (z. B. 20 oder 25 Millimeter), wodurch man ca. 90 % aller Montagesituationen in der Praxis abdecken können wird. Es kann vorgesehen sein, dass der vordefinierte Betrag zwischen 18 und 26 Millimeter, vorzugsweise bei 20 oder 25 Millimeter, liegt.

Nach erfolgter Positionierung des Dämstoffhalters in der Dämmstoffplatte kann auf bekannte Weise die Montage der Dämmstoffplatte durch Einbringen eines Dübels in eine Bohrung im tragenden Untergund erfolgen, wodurch die Dämmstoffplatte im tragenden Untergund verankert ist. Zwischen Dämmstoffplatte und Dämstoffhalter liegen die vorgeschriebenen Überzugskräften vor.

Es kann vorgesehen sein, dass der Dämmstoffhalter mit einem im Wesentlichen zylindrischen Grundkörper und daran angeordneter Wendel ausgebildet ist.

Es kann vorgesehen sein, dass das Eindrehwerkzeug eine mit dem länglichen Grundkörper verbundene polygonale Koppelvorrichtung (vorzugsweise ein Sechskant) zum Verbinden mit dem Dämmstofhalter aufweist. Dabei kann vorgesehen sein, dass eine zusätzliche Koppelvorrichtung zur Kopplung mit einer Schraube vorgesehen ist.

Es ist bei der ersten Variante der Erfindung vorgesehen, dass die zwei verschiedenen Verbindungslagen des Abstandhalters durch Markierungen (z. B. in der Form "Neubau" und "Altbau" bzw. "New building" und "Old render") am Abstandhalter angezeigt sind.

Es ist bei der zweiten Variante der Erfindung vorgesehen, dass die zwei Abstandhalter durch Markierungen (z. B. in der Form "Neubau" und "Altputz" bzw. "New building" und "Old render") unterscheidbar sind.

Es kann vorgesehen sein, dass der Anschlag des oder der Abstandhalter scheibenförmig ausgebildet ist.

Es kann vorgesehen sein (für beide Varianten der Erfindung), dass der Abstandhalter eine dezentrale Öffnung zum Aufschieben auf den länglichen Grundkörper und eine durch eine aufweitbare Hülse begrenzte zentrale Öffnung zum Befestigen des Abstandhalters am länglichen Grundkörper aufweist. Die Befestigung erfolgt so, dass der Abstandhalter nach erfolgtem Aufschieben durch manuelle Druckausübung auf die Hülse, die sich dadurch etwas aufweitet, in die zentrale Öffnung überführt wird, wo er durch die sich wieder zurückstellende Hülse sicher gehalten wird. Dies stellt einen Spezialfall einer allgemein vorsehbaren werkzeuglosen Befestigung des Abstandhalters am länglichen Grundkörper dar.

Es kann vorgesehen sein, dass die unterschiedlichen vorgegebenen Positionen des länglichen Grundkörpers durch Nuten im Grundkörper ausgebildet sind.

Es kann vorgesehen sein, dass die unterschiedlichen vorgegebenen Positionen des länglichen Grundkörpers mit Angaben (die z. B. in den Nuten angeordnet sein können) zu verschiedenen Dicken der Dämmstoffplatte versehen sind.

Es kann auch vorgesehen sein, einen erfindungsgemäßen Abstandhalter bzw. ein erfindungsgemäßes Paar von Abstandhaltern mit einem Hammerbohrer (mit Rillen) zu kombinieren. Dies kann es ermöglichen, Vorgaben in Bezug auf eine Bohrtiefe (bspw. aus einer Zulassung) exakt einzuhalten. Bis jetzt wurde für die richtige Bohrtiefe eine Markierung mit einem Klebeband am Bohrerschaft verwendet. Hierfür ist es erforderlich, dass der Monteur die Dicke des nichttragenden Untergrundes berücksichtigt, obwohl dieser die Dicke des nichttragenden Untergrundes im Regelfall nicht kennt. Es wird daher meist tiefer gebohrt als erforderlich, womit wertvolle Arbeitszeit verloren geht. Durch den Einsatz eines erfindungsgemäßen Abstandhalters an einem Bohrerschaft kann diesem Problem abgeholfen werden.

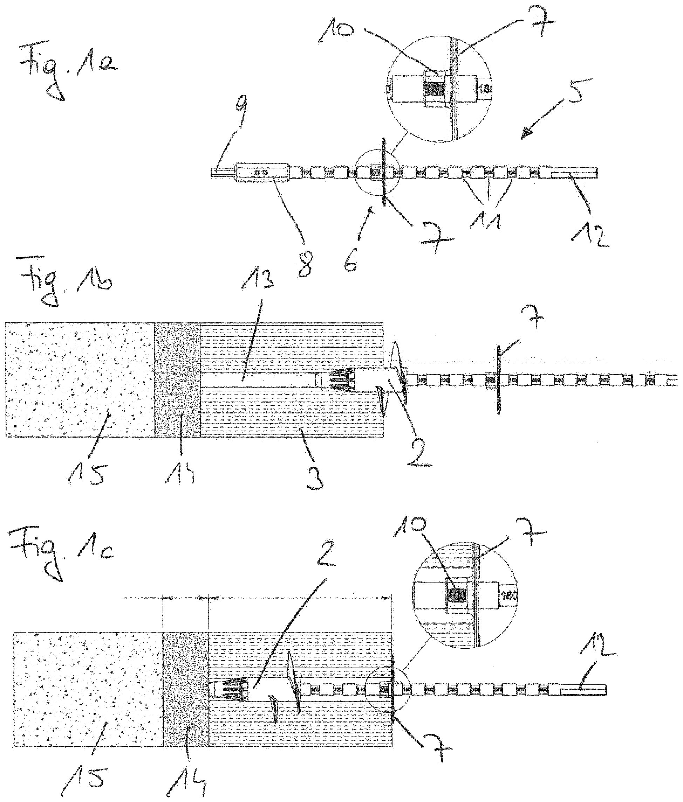

Ausführungsbeispiele der Erfindung werden anhand der Figuren 1 bis 4 diskutiert.

Fig. 1a zeigt zunächst das Eindrehwerkzeug 5 zusammen mit einem daran in einer ersten der zwei verschiedenen Verbindungslagen befestigten Abstandhalter 6. Das Eindrehwerkzeug 5 verfügt über mehrere Nuten 11 (der Übersichtlichkeit halber sind nicht alle mit Bezugszeichen versehen), welche hier die unterschiedlichen vorgegebenen Positionen des länglichen Grundkörpers entsprechend einer Dicke der zu befestigenden Dämmstoffplatte 3 bilden. Die Nuten 11 sind dementsprechend mit möglichen Dicken der Dämmstoffplatten 3 (in Millimeter) beschriftet. Am hinteren Ende des Eindrehwerkzeugs 5 befindet sich eine Vorrichtung 12 zum Koppeln des Eindrehwerkzeugs 5 mit einem nicht dargestellten Bohrhammer oder dergleichen. Am führenden Ende des Eindrehwerkzeugs 5 befindet sich eine Koppelvorrichtung 8 zur Koppelung mit einem Dämmstoffhalter 2 (siehe Fig. 1b und 1c). Außerdem befindet sich an der Spitze des Eindrehwerkzeugs 5 eine weitere Koppelvorrichtung 9 mittels welcher das Eindrehwerkzeug 5 mit einer nicht dargestellten Schraube gekoppelt werden kann, welche zum Halten des Dämmstoffhalters 2 dient, wenn die Schraube in einen in einem tragenden Untergrund 15 versenkten Dübel (nicht dargestellt) eingedreht ist.

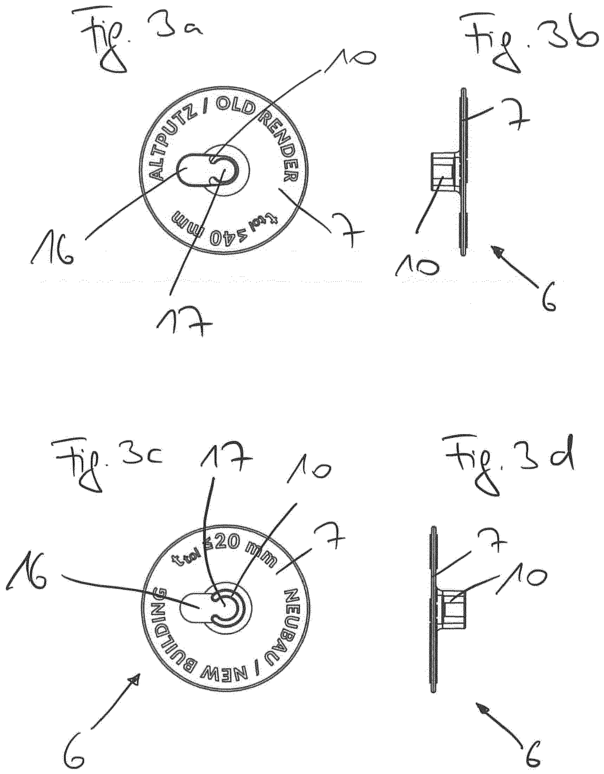

Der Abstandhalter 6 verfügt über einen scheibenförmigen Anschlag 7. An diesem ist eine aufweitbare Hülse 10 befestigt oder ausgebildet. Über eine (in den Fig. 3a bis 3d gezeigte) dezentrale Öffnung 16 ist der Abstandhalter 6 auf das Eindrehwerkzeug 5 aufschiebbar. Durch Ausüben eines Drucks auf die Hülse 10 wird dieselbe aufgeweitet, sodass ein Einklipsen des Eindrehwerkzeugs 5 in die aufweitbare Hülse 10 erfolgen kann.

In Fig. 1b ist das Eindrehen des Dämmstoffhalters 2 für einen Altbau dargestellt. Der Dämmstoffhalter 2 weist hier einen im Wesentlichen zylindrischen Grundkörper und eine Wendel auf. Er ist auf das Eindrehwerkzeug 5 aufgesetzt - gekoppelt über die Koppelvorrichtung 8. Der Dämmstoffhalter 2 wird dann soweit in die Dämmstoffplatte 3 eingedreht (hier über eine optionale Vorbohrung 13), bis eine äußere Oberfläche der Dämmstoffplatte 3 am Anschlag 7 fluchtet und der Dämmstoffhalter 2 daher nicht weiter eingedreht werden kann.

Fig. 1c zeigt, dass der Abstandhalter 6 genau an der richtigen Nut 11 befestigt ist, denn das führende Ende des Dämmstoffhalters 2 liegt genau auf dem nichttragenden Untergrund 14 auf. In weiterer Folge wird das Eindrehwerkzeug 5 abgezogen, mit einem Bohrer durch den Dämmstoffhalter 2 und den nichttragenden Untergrund 14 in den tragenden Untergrund 15 eine Bohrung gesetzt. In die Bohrung wird ein Dübel eingeführt. Schließlich wird eine Schraube durch den Dämmstoffhalter 2 in den Dübel eingedreht, wodurch die Verankerung des Dämmstoffhalters 2 am tragenden Untergrund 15 hergestellt ist. Durch die Wendel ist die Dämmstoffplatte 3 ihrerseits am Dämmstoffhalter 2 befestigt. Insgesamt ergibt sich die Verankerung der Dämmstoffplatte 3 am tragenden Untergrund 15.

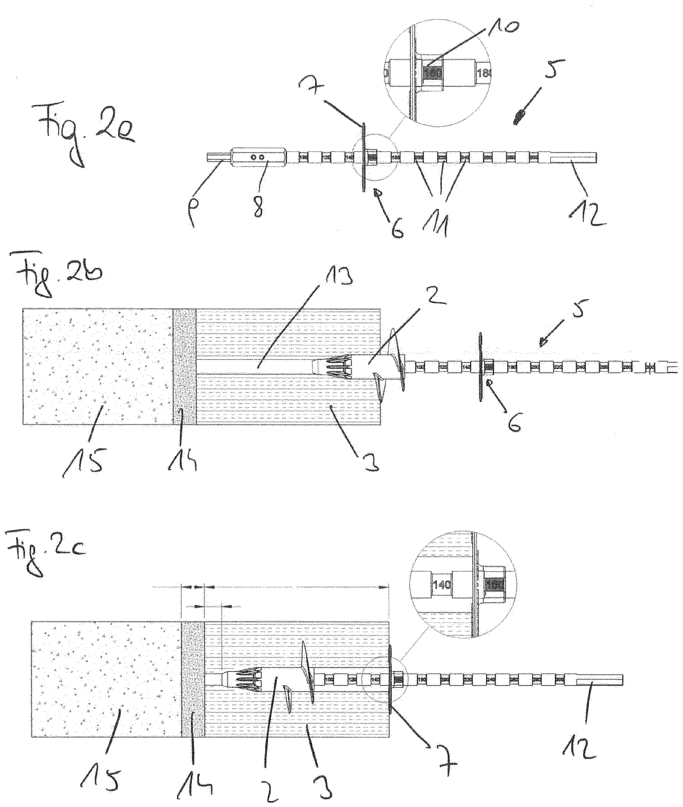

Die Fig. 2a bis 2c zeigen dasselbe Verfahren im Falle eines Neubaus. Im Unterschied zum Altbau ist bei einem Neubau der nichttragende Untergrund 14 nur etwa halb so dick. Wie insbesondere am Insert in der Fig. 2a zu erkennen ist, wurde um dieser Situation Rechnung zu tragen lediglich der Abstandhalter 6 in einer zweiten der zwei verschiedenen Verbindungslagen am Eindrehwerkzeug 5 befestigt. Die zwei Verbindungslagen unterscheiden sich in dieser Ausführungsform der Erfindung dadurch, dass der Abstandhalter 6 mit der einen oder anderen Seite voran auf den länglichen Grundkörper des Eindrehwerkzeugs 5 befestigt ist.

Die Fig. 3a zeigt den Abstandhalter 6 in einer Draufsicht auf jene Seite, die dem Monteur ausgerichtet in Eindrehrichtung zugewandt sein soll, wenn die Dämmstoffplatte 3 bei einem Altbau zu verankern ist. Fig. 3c zeigt den Abstandhalter 6 in einer Draufsicht auf jene Seite, die dem Monteur ausgerichtet in Eindrehrichtung zugewandt sein soll, wenn die Dämmstoffplatte 3 bei einem Neubau zu verankern ist. Gut erkennbar sind die zentrale Öffnung 17, die teilweise von der aufweitbaren Hülse 10 umgeben ist und die dezentrale Öffnung 16.

Fig. 3b und 3d zeigen die zugehörigen Seitenansichten.

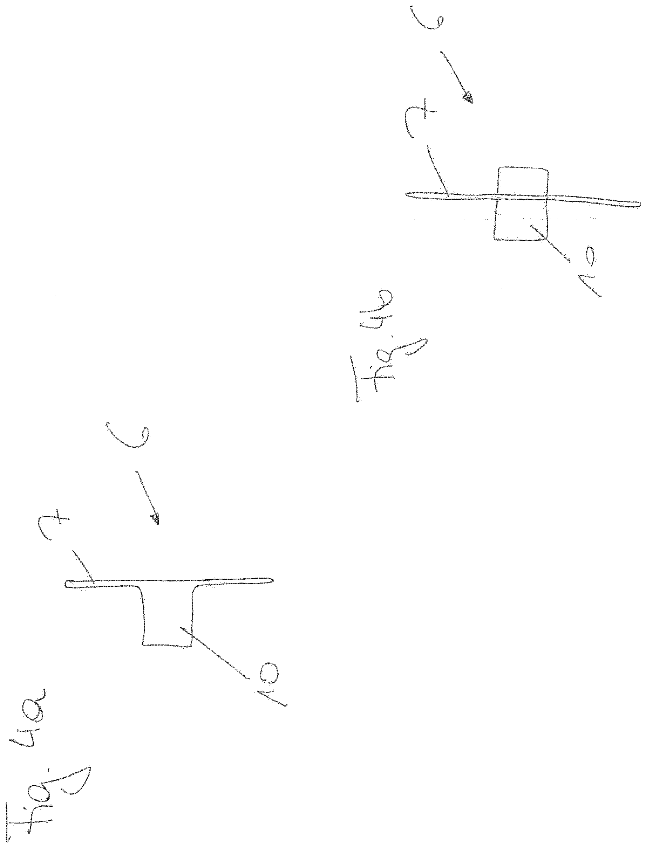

Fig. 4a zeigen eine Ausführungsform des Abstandhalters 6 gemäß der zweiten Variante der Erfindung. Der in Fig. 4a dargestellte Abstandhalter 6 kann so ausgeführt sein, wie bei der ersten Variante der Erfindung. Der in Fig. 4b gezeigte Abstandhalter 6 unterscheidet sich durch einen zusätzlichen, hier zylindrischen Vorsprung auf jener Seite des Abstandhalters 6, welche der Seite entgegengesetzt ist, an welcher sich die aufweitbare Hülse 10 befindet. Die zwei Abstandhalter 6 unterscheiden sich voneinander in dem mit dem Eindrehwerkzeug 5 an einer der unterschiedlichen vorgegebenen Positionen des länglichen Körpers verbundenen Zustand durch eine unterschiedliche Positionierung des Anschlags 7 um einen vordefinierten Betrag zum Eindrehwerkzeug 5, der so bemessen ist, dass er die korrekte Positionierung des Abstandhalters 6 bei einem Altbau gewährleistet.

Bei allen Ausführungsformen kann der Abstandhalter aus einem Kunststoff hergestellt sein. Er kann alternativ aus einem Metall gefertigt sein. Dann bietet sich eine Klemmvorrichtung zur Befestigung am Eindrehwerkzeug 5 an.

## Patentansprüche

1. Positioniervorrichtung (1) zur korrekten Positionierung eines Dämmstoffhalters (2) in einer Dämmstoffplatte (3), wobei die Positioniervorrichtung (1) ein mit dem Dämmstoffhalter (2) verbindbares Eindrehwerkzeug (5) aufweist, durch welches der Dämmstoffhalter (2) in seinem mit dem Eindrehwerkzeug (5) verbundenen Zustand in die Dämmstoffplatte (3) eindrehbar ist, und wobei das Eindrehwerkzeug (5) einen länglichen Grundkörper aufweist, und wenigstens einem Abstandhalter (6), der wahlweise an unterschiedlichen vorgegebenen Positionen des länglichen Grundkörpers entsprechend einer Dicke der zu befestigenden Dämmstoffplatte (3) mit dem Eindrehwerkzeug (5) verbindbar ist und über einen Anschlag (7) verfügt, durch welchen jene Länge begrenzbar ist, bis zu welcher das Eindrehwerkzeug (5) in die Dämmstoffplatte (3) eindrehbar ist, **dadurch gekennzeichnet, dass**
- entweder der Abstandhalter (6) zwei verschiedene Verbindungslagen zum wahlweisen Verbinden mit dem Eindrehwerkzeug (5) aufweist und dass der Anschlag (7) in dem mit dem Eindrehwerkzeug (5) an einer der unterschiedlichen vorgegebenen Positionen des länglichen Körpers verbundenen Zustand in den zwei verschiedenen Verbindungslagen um einen vordefinierten Betrag zum Eindrehwerkzeug (5) verschoben ist, wobei die zwei verschiedenen Verbindungslagen des Abstandhalters (6) durch Markierungen am Abstandhalter (6) angezeigt sind
- oder zwei Abstandhalter (6) vorgesehen sind, die sich voneinander in dem mit dem Eindrehwerkzeug (5) an einer der unterschiedlichen vorgegebenen Positionen des länglichen Körpers verbundenen Zustand durch eine unterschiedliche Positionierung des Anschlags (7) um einen vordefinierten Betrag zum Eindrehwerkzeug (5) unterscheiden, wobei die zwei Abstandhalter (6) durch Markierungen unterscheidbar sind.

2. Positioniervorrichtung nach Anspruch 1, wobei der vordefinierte Betrag zwischen 18 und 26 Millimeter, vorzugsweise bei 20 oder 25 Millimeter, liegt.

3. Positioniervorrichtung nach wenigstens einem der vorangehenden Ansprüche, wobei sich die zwei Verbindungslagen dadurch unterscheiden, dass der Abstandhalter (6) mit der einen oder anderen Seite voran auf dem länglichen Grundkörper des Eindrehwerkzeugs (5) befestigt ist.

4. Positioniervorrichtung nach wenigstens einem der vorangehenden Ansprüche, wobei der Dämmstoffhalter (2) mit einem im Wesentlichen zylindrischen Grundkörper und daran angeordneter Wendel ausgebildet ist.

5. Positioniervorrichtung nach wenigstens einem der vorangehenden Ansprüche, wobei das Eindrehwerkzeug (5) eine mit dem länglichen Grundkörper verbundene polygonale Koppelvorrichtung (8) zum Verbinden mit dem Dämmstoffhalter (2) aufweist.

6. Positioniervorrichtung nach dem vorangehenden Anspruch, wobei eine zusätzliche Koppelvorrichtung (9) zur Kopplung mit einer Schraube vorgesehen ist.

7. Positioniervorrichtung nach wenigstens einem der vorangehenden Ansprüche, wobei der Anschlag (7) des oder der Abstandhalter (6) scheibenförmig ausgebildet ist.

8. Positioniervorrichtung nach wenigstens einem der vorangehenden Ansprüche, wobei der Abstandhalter (6) eine dezentrale Öffnung (16) zum Aufschieben auf den länglichen Grundkörper und eine durch eine aufweitbare Hülse (10) begrenzte zentrale Öffnung (17) zum Befestigen des Abstandhalters (6) am länglichen Grundkörper aufweist

9. Positioniervorrichtung nach wenigstens einem der vorangehenden Ansprüche, wobei die unterschiedlichen vorgegebenen Positionen des länglichen Grundkörpers durch Nuten (11) im Grundkörper ausgebildet sind.

10. Positioniervorrichtung nach wenigstens einem der vorangehenden Ansprüche, wobei die unterschiedlichen vorgegebenen Positionen des länglichen Grundkörpers mit Angaben zu verschiedenen Dicken der Dämmstoffplatte (3) versehen sind.

11. Positioniervorrichtung nach dem vorangehenden Anspruch, wobei die Angaben in den Nuten (11) angeordnet sind.

## Claims

1. A positioning apparatus (1) for correct positioning of an insulation holder (2) in an insulation panel (3), wherein the positioning apparatus (1) has a screw-in tool (5) which can be connected to the insulation holder (2) and by which the insulation holder (2) in its state of being connected to the screw-in tool (5) can be screwed into the insulation panel (3), and wherein the screw-in tool (5) has an elongate main body and at least one spacer (6) which can be connected to the screw-in tool (5) selectively at different predetermined positions of the elongate main body corresponding to a thickness of the insulation panel (3) to be fixed and it has an abutment (7) by which that length can be limited, to which the screw-in tool (5) can be screwed into the insulation panel (3), wherein
- either the spacer (6) has two different connecting positions for selective connection to the screw-in tool (5) and the abutment (7) in the state of being connected to the screw-in tool (5) at one of the different predetermined positions of the elongate body can be displaced in the two different connecting positions by a predefined amount relative to the screw-in tool (5), wherein the two different connecting positions of the spacer (6) are marked by markings on the spacer (6), or
- there are provided two spacers (6) which differ from each other in the state of being connected to the screw-in tool (5) at one of the different predetermined positions of the elongate body by different positioning of the abutment (7) by a predefined amount relative to the screw-in tool (5), wherein the two spacers (6) can be distinguished by markings.

2. A positioning apparatus according to claim 1 wherein the predefined amount is between 18 and 26 millimetres, preferably being 20 or 25 millimetres.

3. A positioning apparatus according to at least one of the preceding claims wherein the two connecting positions differ by the spacer (6) being fixed with one side or the other side leading on the elongate main body of the screw-in tool (5).

4. A positioning apparatus according to at least one of the preceding claims wherein the insulation holder (2) is formed with a substantially cylindrical main body and a coil arranged thereon.

5. A positioning apparatus according to at least one of the preceding claims wherein the screw-in tool (5) has a polygonal coupling device (8) connected to the elongate main body for connection to the insulation holder (2).

6. A positioning apparatus according to the preceding claim wherein there is provided an additional coupling device (9) for coupling to a screw.

7. A positioning apparatus according to at least one of the preceding claims wherein the abutment (7) of the spacer or spacers (6) is of a disc-shaped configuration.

8. A positioning apparatus according to at least one of the preceding claims wherein the spacer (6) has an off-centre opening (16) for pushing on to the elongate main body and a central opening (17) delimited by an expandable sleeve (10) for fixing the spacer (6) to the elongate main body.

9. A positioning apparatus according to at least one of the preceding claims wherein the different predetermined positions of the elongate main body are afforded by grooves (11) in the main body.

10. A positioning apparatus according to at least one of the preceding claims wherein the different predetermined positions of the elongate main body are provided with information relating to different thickness of the insulating panel (3).

11. A positioning apparatus according to the preceding claim wherein the information is arranged in the grooves (11).

## Revendications

1. Dispositif de positionnement (1) pour le positionnement correct d'un support de matériau isolant (2) dans une plaque de matériau isolant (3), dans lequel le dispositif de positionnement (1) présente un outil de vissage (5) pouvant être relié au support de matériau isolant (2), au moyen duquel le support de matériau isolant (2), dans son état relié à l'outil de vissage (5), peut être vissé dans la plaque de matériau isolant (3), et dans lequel l'outil de vissage (5) présente un corps de base allongé, et au moins un espaceur (6), qui peut être relié à l'outil de vissage (5) sélectivement en différentes positions prédéfinies du corps de base allongé en fonction d'une épaisseur de la plaque de matériau isolant (3) à fixer et dispose d'une butée (7), au moyen de laquelle la longueur jusqu'à laquelle l'outil de vissage (5) peut être vissé dans la plaque de matériau isolant (3) peut être limitée, dans lequel
- soit l'espaceur (6) présente deux différentes couches de liaison pour la liaison sélective à l'outil de vissage (5) et en ce que la butée (7), dans l'état relié à l'outil de vissage (5) en une des différentes positions prédéfinies du corps allongé, est déplacée par rapport à l'outil de vissage (5) d'une grandeur prédéfinie dans les deux couches de liaison différentes, dans lequel les deux couches de liaison différentes de l'espaceur (6) sont indiquées sur l'espaceur (6) par des marquages
- ou deux espaceurs (6) sont prévus, qui se différencient l'un de l'autre, dans l'état relié à l'outil de vissage (5) en une des différentes positions prédéfinies du corps de base allongé, par un positionnement différent de la butée (7) d'une grandeur prédéfinie par rapport à l'outil de vissage (5), dans lequel les deux espaceurs (6) peuvent être différenciés par des marquages.

2. Dispositif de positionnement selon la revendication 1, dans lequel la grandeur prédéfinie est comprise entre 18 et 26 millimètres, est de préférence de 20 ou 25 millimètres.

3. Dispositif de positionnement selon au moins l'une des revendications précédentes, dans lequel les deux couches de liaison se différencient l'une de l'autre par le fait que l'espaceur (6) est fixé par une ou l'autre face en avant sur le corps de base allongé de l'outil de vissage (5).

4. Dispositif de positionnement selon au moins l'une des revendications précédentes, dans lequel le support de matériau isolant (2) est réalisé avec un corps de base sensiblement cylindrique et des spirales disposées dessus.

5. Dispositif de positionnement selon au moins l'une des revendications précédentes, dans lequel l'outil de vissage (5) présente un dispositif d'accouplement (8) polygonal relié au corps de base allongé pour la liaison au support de matériau isolant (2).

6. Dispositif de positionnement selon la revendication précédente, dans lequel un dispositif d'accouplement (9) additionnel est prévu pour l'accouplement avec une vis.

7. Dispositif de positionnement selon au moins l'une des revendications précédentes, dans lequel la butée (7) de l'espaceur ou des espaceurs (6) est réalisée en forme de disque.

8. Dispositif de positionnement selon au moins l'une des revendications précédentes, dans lequel l'espaceur (6) présente une ouverture décentralisée (16) à pousser sur le corps de base allongé et une ouverture centrale (17), délimitée par un manchon (10) pouvant s'élargir, pour la fixation de l'espaceur (6) au corps de base allongé.

9. Dispositif de positionnement selon au moins l'une des revendications précédentes, dans lequel les différentes positions prédéfinies du corps de base allongé sont réalisées par des rainures (11) dans le corps de base.

10. Dispositif de positionnement selon au moins l'une des revendications précédentes, dans lequel les différentes positions prédéfinies du corps de base allongé sont pourvues d'indications concernant différentes épaisseurs de la plaque de matériau isolant (3).

11. Dispositif de positionnement selon la revendication précédente, dans lequel les indications sont disposées dans les rainures (11).
